# EUROPÄISCHE PATENTSCHRIFT

(11) **EP 0 731 058 B1**
(45) Veröffentlichungstag und Bekanntmachung des Hinweises auf die Patenterteilung: **26.07.2000**
(21) Anmeldenummer: 96101787.8
(22) Anmeldetag: 08.02.1996
(51) Int. Cl.: C01B 33/38

(54) **Kristallines Natriumschichtsilikat**
Crystalline layered sodium silicate
Silicate de sodium en couches cristallin

(30) Priorität: 06.03.1995 DE 19507784; 15.01.1996 DE 19601063
(43) Veröffentlichungstag der Anmeldung: 11.09.1996
(73) Patentinhaber: Clariant GmbH, 65929 Frankfurt am Main (DE)
(72) Erfinder: Wilkens, Jan, Dr., D-50354 Hürth (DE); Schimmel, Günther, Dr., D-50375 Erftstadt (DE)

(56) Entgegenhaltungen:
- EP-A- 0 056 094
- EP-A- 0 164 514
- EP-A- 0 164 552
- EP-A- 0 205 070
- EP-A- 0 548 599

## Beschreibung

Die Erfindung betrifft ein kristallines Natriumschichtsilikat, ein Verfahren zu seiner Herstellung und seine Verwendung.

Die verschiedenen bekannten kristallinen Natriumsilikate lassen sich voneinander durch ihre Zusammensetzung sowie durch ihr jeweils spezifisches Röntgenbeugungsdiagramm unterscheiden. Häufig läßt sich ein Natriumsilikat bei unveränderter Zusammensetzung mit unterschiedlichen Kristallstrukturen herstellen. Die einzelnen Formen unterscheiden sich im allgemeinen in ihren physikalischen und chemischen Eigenschaften voneinander. Einer der wichtigsten, auf synthetischem Wege zugänglichen Natriumschichtsilikate ist die δ-Modifikation des Natriumdisilikats, das sogenannte SKS-6 oder auch δ-Na₂Si₂O₅, das eine hohe Ionenaustauschkapazität für Calcium- und Magnesiumionen aufweist und insbesondere zur Wasserenthärtung verwendet wird (EP-A-0 164 514).

Ein wichtiger Parameter zur Messung der Ionenaustauschfähigkeit und zur Charakterisierung der Schichtsilikate ist das Kalkbindevermögen (KBV), das bei einer definierten Meßmethode angibt, welche Menge an Calciumionen das Schichtsilikat in wäßriger Lösung zu binden vermag. Dabei ist sehr wichtig, daß dieses Ionenaustauschvermögen möglichst schnell nach Zugabe des Schichtsilikats zu Wasser zur Verfügung steht. Üblicherweise liegen die KBV-Werte für die einzelnen Na₂Si₂O₅-Modifikationen oder Gemische derselben zwischen 30 und 80 mg Ca²⁺/g Schichtsilikat.

Die Herstellung von kristallinen Natriumdisilikaten mit Schichtstruktur ist auf verschiedenen Wegen möglich. Nach der DE-A-31 00 942 erhält man durch Temperung von Natriumsilikatgläsern oder durch Erhitzen von Natriumcarbonat mit Quarz kristalline Natriumsalze von Kieselsäuren mit einem SiO₂/Na₂O-Verhältnis von 2 : 1 bis 3 : 1.

Die DE-A-34 17 649 beschreibt ein Verfahren zur Herstellung von kristallinen Natriumsilikaten mit einem Molverhältnis von SiO₂/Na₂O von 1,9 : 1 bis 3,5 : 1 aus amorphem Natriumsilikat, wobei man wasserhaltiges amorphes Natriumsilikat mit Impfkristallen versetzt, die Reaktionsmischung durch Erhitzen entwässert und die entwässerte Reaktionsmischung solange bei einer Temperatur hält, die mindestens 450 °C beträgt, jedoch unter dem Schmelzpunkt liegt, bis das Natriumsilikat kristallisiert ist. Nach dieser Methode lassen sich die α-, β-, γ- und δ-Modifikationen des Na₂Si₂O₅ herstellen.

Willgallis und Range (Glastechn. Ber. 37 (1964), 194-200) beschreiben die Herstellung von α-, β- und γ-Na₂Si₂O₅ durch Temperung von geschmolzenem und nicht-geschmolzenem entwässertem Natronwasserglas. Diese Produkte haben Schichtstruktur; aus den Röntgendiffraktogrammenn ergibt sich die kristalline Form. In Abhängigkeit von der Temperatur können die verschiedenen, obengenannten Kristallmodifikationen erhalten werden. Die Herstellung von δ-Na₂Si₂O₅ ist nach diesem Verfahren allerdings nicht möglich.

Die DE-A-41 42 711 beschreibt ein Verfahren zur Herstellung von kristallinen Natriumdisilikaten mit Schichtstruktur durch Umsetzung von Sand mit Natronlauge und Sprühtrocknen der so gewonnenen Wasserglaslösung, wobei man das sprühgetrocknete, pulverförmige amorphe Natriumdisilikat aufmahlt, in einen Drehrohrofen einbringt und darin bei Temperaturen von 400 bis 800 °C bis zu einer Stunde unter Bildung von kristallinem Natriumdisilikat behandelt.

In der EP-A-0 550 048 wird ein anorganisches Ionenaustauschmaterial beschrieben, daß der Formel x M₂O·y SiO₂·z M'O entspricht und worin M = Na oder K, M' = Ca oder Mg ist mit y/x = 0,5 - 2,0 und z/x = 0,005 - 1,0. Aus den weiteren Angaben dieser Schrift ist zu entnehmen, daß es sich um sehr alkalireiche Silikate mit Kettenstruktur handelt, die aber offenbar nicht phasenrein erhalten werden.

Schließlich beschreibt die japanische Offenlegungsschrift Hei 4-160 013 ein Verfahren zur Herstellung von Typen des δ-Natriumdisilikates, indem eine Bor-haltige Verbindung mit einer wäßrigen Lösung eines Alkalimetalldisilikates mit einem molaren Verhältnis SiO₂M₂O (M = Alkalimetall) von 1 bis 3 gemischt wird und nachfolgend getrocknet und calciniert wird. Die Ausbeute und Kristallinität des Produktes wird hauptsächlich über das Verhältnis SiO₂/M₂O gesteuert.

Nachteilig bei den bekannten Verfahren ist, daß sie entweder gar nicht zu einem Produkt der Zusammensetzung Na₂Si₂O₅ führen oder aber, daß die besonders vorteilhafte δ-Modifikation nicht in hoher Ausbeute erhalten wird, sondern mit α-, β- und γ-Na₂Si₂O₅ verunreinigt ist.

Insbesondere besteht ein Bedarf an kristallinem Natriumschichtsilikat mit einer erhöhten Ionenaustauschkapazität für Ca²⁺-Ionen in wäßriger Lösung.

Es war daher Aufgabe der Erfindung, ein kristallines Natriumschichtsilikat zur Verfügung zu stellen, das insbesondere eine in Bezug auf Ca²⁺-Ionen erhöhte Ionenaustauschkapazität aufweist. Vorzugsweise soll dabei das Calciumbindevermögen bereits kurz nach Zugabe des Natriumschichtsilikats zu Wasser einen möglichst hohen Wert annehmen.

Diese Aufgabe wird gelöst durch ein kristallines Natriumschichtsilikat gemäß Anspruch 1 mit der Formel x Na₂O · y SiO₂ · z P₂O₅, in der
das Verhältnis x zu y einer Zahl von 0,35 bis 0,6,
das Verhältnis x zu z einer Zahl von 1,75 bis 1200
und das Verhältnis y zu z einer Zahl von 4 bis 2800 entspricht.

Bevorzugt entspricht in der vorgenannten Formel das Verhältnis x zu y einer Zahl von 0,40 bis 0,57, x zu z einer Zahl von 8 bis 400 und y zu z einer Zahl von 20 bis 800.

Besonders bevorzugt entspricht x zu y einer Zahl von 0,45 bis 0,55, x zu z einer Zahl von 15 bis 200 und y zu z einer Zahl von 40 bis 400.

Insbesondere die letztgenannten Zusammensetzungen führen zu erfindungsgemäßen Natriumschichtsilikaten mit hoher Kristallinität und einem sehr hohen Calciumbindevermögen von mehr als 85 mg Ca²⁺/g Natriumschichtsilikat, bevorzugt von mehr als 90 mg Ca²⁺/g Natriumschichtsilikat.

Regelmäßig lassen sich mit den erfindungsgemäßen Natriumschichtsilikaten KBV-Werte von mehr als 100 mg Ca²⁺/g Natriumschichtsilikat erreichen.

Ebenso besteht Bedarf an einem einfachen Verfahren, um die vorgenannten, erfindungsgemäßen kristallinen Natriumschichtsilikate in einem weiten Temperaturbereich mit möglichst hoher Ausbeute zu kristallisieren.

Diese Aufgabe wird gelöst durch ein Verfahren zur Herstellung eines kristallinen Natriumschichtsilikats der allgemeinen Formel x N₂O ^{·} y SiO₂ ^{·} z P₂O₅, in der x, y und z die vorstehend genannte Bedeutung haben, welches dadurch gekennzeichnet ist, daß man eine phosphorhaltige Verbindung in einem wäßrigen Medium mit einer Silikatverbindung mischt, zur Reaktion bringt, teilentwässert und anschließend calciniert.

Als phosphorhaltige Verbindungen kommen solche der allgemeinen Formel Hₙ₊₂PₙO₃ₙ₊₁ (n = 1 bis 6), HₙPₙO₃ₙ(n = 3 bis 8) und HPO₃ sowie deren Alkalisalze und/oder Diphosphorpentoxid in Frage.

Als Silikatverbindung können beispielsweise Kieselsäure, Kieselgel, Natronwasserglas und/oder Quarzsand verwendet werden.

Die Teilentwässerung des Gemisches aus der phosphorhaltigen Verbindung und der wäßrigen Lösung der Silikatverbindung erfolgt bei 80 bis 300 °C, bevorzugt bei 105 bis 220 °C und führt zu amorphen, wasserhaltigen Produkten, deren Glühverluste (720 °C, 1 h) zwischen 1 und 22 Gew.-% liegen.

Beim erfindungsgemäßen Verfahren wird bei 560 bis 840 °C, bevorzugt bei 600 bis 780 °C calciniert.

Der Zeitraum für das Calcinieren ist nicht kritisch, er beträgt im allgemeinen 0,5 bis 5 Stunden.

Die erfindungsgemäßen Natriumschichtsilikate eignen sich hervorragend zur Enthärtung von Wasser, das Calcium- und/oder Magnesiumionen enthält.

Ebenso können die erfindungsgemäßen Natriumschichtsilikate in vielen Einsatzbereichen als Builder verwendet werden.

Ihre bevorzugte Verwendung finden die erfindungsgemäßen Natriumschichtsilikate in Wasch- und Reinigungsmitteln.

Ebenso hervorzuheben ist neben ihrer hervorragenden Primärwaschwirkung auch eine verbesserte Sekundärwaschwirkung. Diese zeigt sich insbesondere in einer deutlich verringerten Inkrustation des mit dem erfindungsgemäßen Natriumschichtsilikat gewaschenen Gewebes.

In den folgenden Beispielen, in denen die Erfindung näher beschrieben wird, wurde das Kalkbindevermögen der erhaltenen kristallinen Natriumdisilikate wie folgt ermittelt:

### Methode 1

30 g einer Calciumlösung (131,17 g CaCl₂ · 2H₂O werden in destilliertes Wasser gelöst und auf 5000 g aufgefüllt) werden mit 5,6 g einer Pufferlösung (75,07 g Glycin und 58,4 g NaCl werden in destilliertes Wasser gelöst und auf 1000 ml aufgefüllt) gemischt und mit destilliertem Wasser auf 999 g aufgefüllt. Diese Lösung, die einer Wasserhärte von 30 °dH bzw. 300 mg CaO/l entspricht, wird auf 20 °C temperiert und mit 1 g Probe versetzt. Die Lösung wurde für eine bestimmte Zeit (z.B. 10 Minuten) gerührt, abfiltriert und im Filtrat das in der Lösung verbliebene Calcium komplexometrisch bestimmt. Durch Differenzbildung mit dem ursprünglichen Calcium-Gehalt wurde das Calcium-Bindevermögen, allgemein als KBV-Wert bezeichnet, bestimmt.

### Methode 2

Die Calcium-Stammlösung besteht aus 157,30 g CaCl₂ · 2H₂O, das in destilliertem Wasser gelöst und auf 1000 ml aufgefüllt wird. Zur Herstellung der Pufferlösung werden 88,5 g Glycin und 69,04 g NaCl in 520 ml 1 n Natronlauge gelöst und mit destilliertem Wasser auf 2000 ml aufgefüllt.

980 ml destilliertes Wasser, 20 ml Pufferlösung und insgesamt 5 ml Calcium-Stammlösung werden gemischt und auf 20 °C temperiert. Die resultierende Wasserhärte entspricht ebenfalls 30 °dH. Nach Zugabe von 1 g Probensubstanz wird die ungebundene Calciumkonzentration mit Hilfe einer ionensensitiven Elektrode (z.B. Fa. ORION, Modell 900 200) fortlaufend detektiert. Als Maß für die Schnelligkeit der Wasserenthärtung wird in den folgenden Beispielen der KBV-Wert nach 1 und nach 3 Minuten aufgeführt.

Die Primärwaschwirkung des Textilwaschmittels wurde bei 60 °C an verschiedenen Testgeweben gemäß DIN 53 919 durch Bestimmung der Remissionsdifferenz ermittelt, die sich aus der Differenz der Remission des Testgewebes nach und vor dem Waschen ergibt. Die Sekundärwaschwirkung wurde ebenfalls bei 60 °C an verschiedenen Testgeweben gemäß DIN 53919 bestimmt.

### Beispiel 1

Ein Rührautoklav - mit 0,25 l Gesamtinhalt und ausgestattet mit Teflon-Inliner - wurde mit 230 g einer Mischung aus 113,6 g Natronlauge (50 Gew.-%), 13,57 g Na₃PO₄·12 H₂O, 88,8 g Kieselsäure (Wacker HDK T30) und 60 g destilliertem Wasser gefüllt, auf 200°C (entsprechend ca. 15 bar) aufgeheizt und für 90 Minuten bei dieser Temperatur gehalten. Das Produkt wurde entnommen, sprühgetrocknet und anschließend eine Stunde bei 720°C calciniert. Das Endprodukt enthält gemäß Analyse 8100 ppm Phosphor. Mit Hilfe des Röntgenbeugungsdiffraktogramms läßt sich das phosphorhaltige Produkt als ein zur metastabilen δ-Modifikation des Na₂Si₂O₅ analoges Schichtsilikat interpretieren.

Das Kalkbindevermögen des Produktes wurde gemäß Methode 1 zu 101 mg Ca²⁺/g bestimmt. Gemäß Methode 2 läßt sich ein KBV-Wert von 98 mg Ca²⁺/g nach 1 Minute bzw. 98 mg Ca²⁺/g nach 3 Minuten ermitteln.

### Beispiel 2

Es wurde analog Beispiel 1 verfahren, wobei jedoch die Calcinierungstemperatur entsprechend Tabelle 1 variiert wurde. Die Röntgenbeugungsdiffraktogramme der phosphorhaltigen Produkte lassen sich mit den literaturbekannten Daten der verschiedenen Modifikationen des Na₂Si₂O₅ interpretieren. Eine Abschätzung der röntgenographisch ermittelten Phasenzusammensetzungen sowie die KBV-Werte der phosphorhaltigen Schichtsilikate sind ebenfalls in Tabelle 1 aufgeführt.

### Beispiel 3 (Vergleichsbeispiel)

Es wurde analog zu den Beispielen 1 und 2 verfahren, jedoch wurde dem Ansatz keine Phosphorverbindung zugegeben. Die resultierenden Ergebnisse sind der Tabelle 2 zu entnehmen.

### Beispiel 4

Ein Rührautoklav - mit 0,25 l Gesamtinhalt und ausgestattet mit Teflon-Inliner - wurde mit 230 g einer Mischung aus 113,6 g Natronlauge (50 Gew.-%), 27,13 g Na₃PO₄ · 12 H₂O, 96,6 g Kieselsäure (Wacker HDK T30) und 45 g destilliertem Wasser gefüllt, auf 200°C (entsprechend ca. 15 bar) aufgeheizt und für 90 Minuten bei dieser Temperatur gehalten. Das Produkt wurde entnommen, sprühgetrocknet und anschließend eine Stunde bei 720°C calciniert. Das Endprodukt enthält gemäß Analyse 14500 ppm Phosphor. Das Röntgenbeugungsdiffraktogramm des phosphorhaltigen Produktes läßt sich als ein δ-phasenanaloges Schichtsilikat interpretieren.

Das Kalkbindevermögen des Produktes wurde gemäß Methode 1 zu 104 mg Ca²⁺/g bestimmt. Gemäß Methode 2 läßt sich ein KBV-Wert von 104 mg Ca²⁺/g nach 1 Minute bzw. 102 mg Ca²⁺/g nach 3 Minuten ermitteln.

### Beispiel 5

Es wurde analog Beispiel 4 verfahren, wobei jedoch die Calcinierung bei 700°C durchgeführt wurde. Das Röntgenbeugungsdiffraktogramm des phosphorhaltigen Produktes läßt sich weitgehend als ein δ-phasenanaloges Schichtsilikat interpretieren. Der Anteil der kristallinen Tieftemperatur-Modifikation (β-Phase) liegt unter 25%; eine α-phasenanaloge Hochtemperatur-Modifikation läßt sich röntgenographisch nicht nachweisen.

Das Kalkbindevermögen des Produktes wurde gemäß Methode 1 zu 113 mg Ca²⁺/g bestimmt. Gemäß Methode 2 läßt sich ein KBV-Wert von 114 mg Ca²⁺/g nach 1 Minute bzw. 114 mg Ca²⁺/g nach 3 Minuten ermitteln.

### Beispiel 6

Ein Rührautoklav - mit 0,25 l Gesamtinhalt und ausgestattet mit Teflon-Inliner - wurde mit 230 g einer Mischung aus 113,6 g Natronlauge (50 Gew.-%), 1,60 g Na₃PO₄ · 12 H₂O, 86,6 g Kieselsäure (Wacker HDK T30) und 60 g destilliertem Wasser gefüllt, auf 200°C (entsprechend ca. 15 bar) aufgeheizt und für 90 Minuten bei dieser Temperatur gehalten. Das Produkt wurde entnommen, sprühgetrocknet und anschließend eine Stunde bei 720°C calciniert. Das Endprodukt enthält gemäß Analyse 995 ppm Phosphor. Das Röntgenbeugungsdiffraktogramm des phosphorhaltigen Produktes läßt sich als ein δ-phasenanaloges Schichtsilikat interpretieren.

Das Kalkbindevermögen des Produktes wurde gemäß Methode 1 zu 104 mg Ca²⁺/g bestimmt. Gemäß Methode 2 läßt sich ein KBV-Wert von 104 mg Ca²⁺/g nach 1 Minute bzw. 102 mg Ca²⁺/g nach 3 Minuten ermitteln.

### Beispiel 7

Ein Rührautoklav - mit 0,25 l Gesamtinhalt und ausgestattet mit Teflon-Inliner - wurde mit 230 g einer Mischung aus 116,4 g Natronlauge (50 Gew.-%), 2,05 g Phosphorsäure (85 %ig), 86,6 g Kieselsäure (Wacker HDK T30) und 60 g destilliertem Wasser gefüllt, auf 200°C (entsprechend ca. 15 bar) aufgeheizt und für 90 Minuten bei dieser Temperatur gehalten. Das Produkt wurde entnommen, sprühgetrocknet und anschließend eine Stunde bei 720°C calciniert. Das Endprodukt enthält gemäß Analyse 4500 ppm Phosphor. Das Röntgenbeugungsdiffraktogramm des phosphorhaltigen Produktes läßt sich weitgehend als ein δ-phasenanaloges Schichtsilikat interpretieren; der Anteil der α-Phase liegt unter 10 %.

Das Kalkbindevermögen des Produktes wurde gemäß Methode 1 zu 98 mg Ca²⁺/g bestimmt. Gemäß Methode 2 läßt sich ein KBV-Wert von 98 mg Ca²⁺/g nach 1 Minute bzw. 99 mg Ca²⁺/g nach 3 Minuten ermitteln.

### Beispiel 8

Es wurde analog Beispiel 7 verfahren, wobei jedoch die Calcinierung bei 680°C durchgeführt wurde. Das Röntgenbeugungsdiffraktogramm des phosphorhaltigen Produktes läßt sich weitgehend als ein δ-phasenanaloges Schichtsilikat interpretieren. Der Anteil der kristallinen Tieftemperatur-Modifikation (β-Phase) liegt deutlich unter 50%; eine α-phasenanaloge Hochtemperatur-Modifikation läßt sich röntgenographisch nicht nachweisen.

Das Kalkbindevermögen des Produktes wurde gemäß Methode 1 zu 108 mg Ca²⁺/g bestimmt. Gemäß Methode 2 läßt sich ein KBV-Wert von 114 mg Ca²⁺/g nach 1 Minute bzw. 114 mg Ca²⁺/g nach 3 Minuten ermitteln.

### Beispiel 9

Die Waschmittelformulierungen wurden gemäß Tabelle 3 aus den verschiedenen Einzelkomponenten nach dem dem Fachmann geläufigen Sprühnebelmischverfahren hergestellt. Für Vergleichszwecke wurde in der Formulierung A ein handelsübliches kristallines Natriumschichtsilikat (SKS-6, Fa. Hoechst AG; Kalkbindevermögen gemäß Methode 1 von 82 mg Ca²⁺/g) verwendet. Die Formulierung B enthält ein erfindungsgemäßes Natriumschichtsilikat mit 8100 ppm Phosphor (α-Phase < 10 %, β-Phase < 15 %, δ-Phase > 75 %; Kalkbindevermögen gemäß Methode 1 von 104 mg Ca²⁺/g). Es sei darauf hingewiesen, daß beiden Formulierungen keine Polycarboxylate zugesetzt wurden, um das Inkrustierungsverhalten besser beurteilen zu können.

Die Waschversuche wurden mit einer Dosierung von 65 g Waschpulver pro Waschgang bei einer Gesamtwasserhärte von 18 °dH (Verhältnis Ca : Mg = 5 : 1) und einer Temperatur von 60 °C durchgeführt. Die Beladung der Waschautomaten erfolgte mit 3,75 kg Trockenwäsche.

In Tabelle 4 sind die Ergebnisse der Primärwaschleistung, in Tabelle 5 die des Inkrustationsverhaltens aufgeführt.

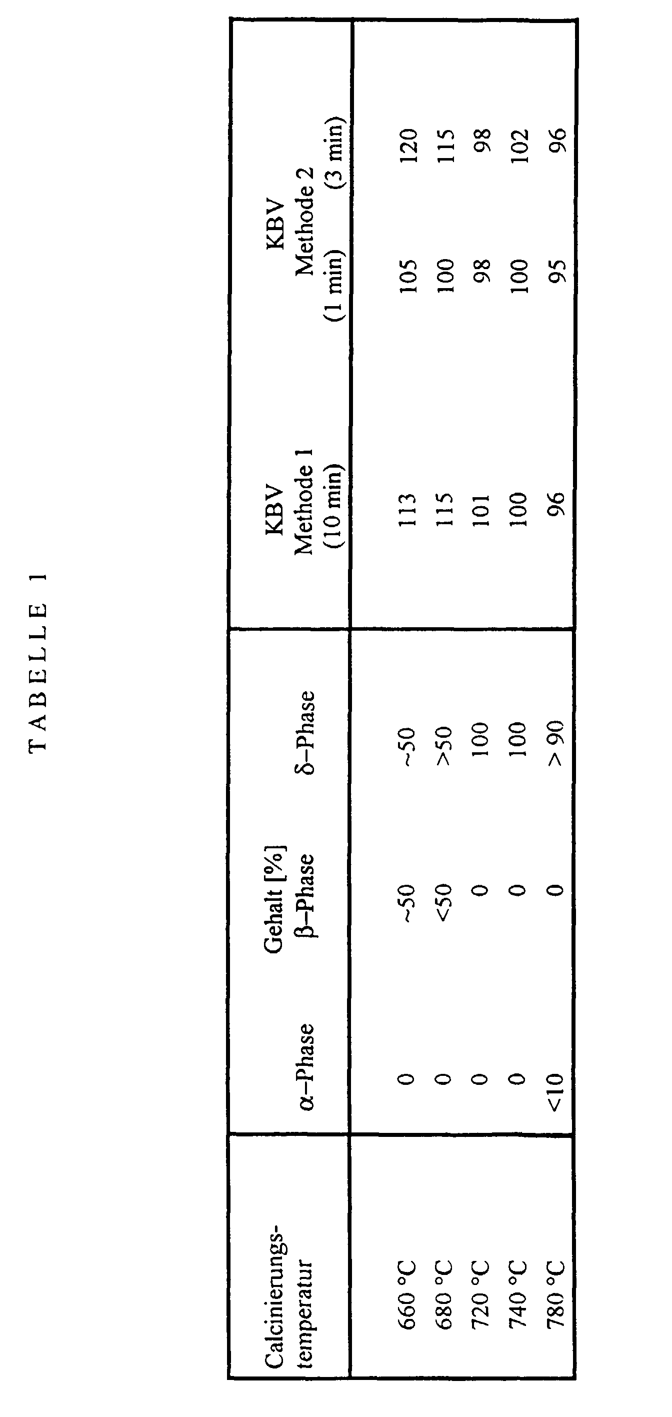

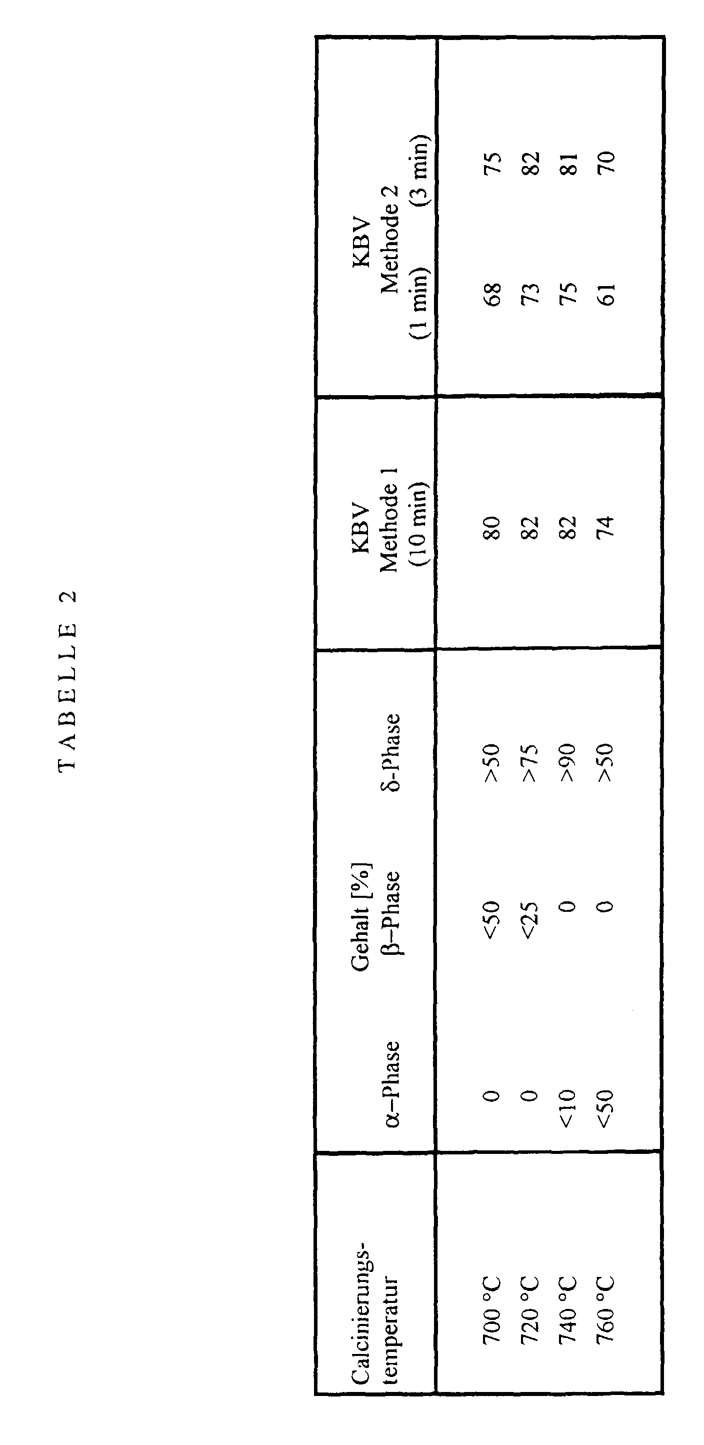

**TABELLE 3:**

| Zusammensetzung der Waschmittelformulierungen (in Gew.-%) | | |
|---|---|---|
| Inhaltsstoff | Formulierung A | Formulierung B |
| Builder (SKS-6) | 39,30 | 0,00 |
| Builder (SKS-6P) | 0,00 | 39,30 |
| Anionisches Tensid (LAS) | 11,00 | 11,00 |
| Nichtionisches Tensid (5 EO) | 3,10 | 3,10 |
| Nichtionisches Tensid (7 EO) | 3,10 | 3,10 |
| Entschäumer aus Silikonbasis | 0,47 | 0,47 |
| optischer Aufheller | 0,28 | 0,28 |
| Enzyme (Proteasen) | 1,60 | 1,60 |
| Enzyme (Amylasen) | 1,60 | 1,60 |
| Bleichsubstanz (Natriumperborat-Monohydrat) | 23,60 | 23,60 |
| Bleichaktivator (TAED) | 6,30 | 6,30 |
| Stellmittel (Natriumsulfat) | 6,55 | 6,55 |

**TABELLE 4:**

| Primärwaschleistung (in % Remissionsdifferenz) | | |
|---|---|---|
| Gewebe | Formulierung A | Formulierung B |
| Baumwolle Standard EMPA 101 | 17,4 | 18,5 |
| Polyester/Baumwolle 2 : 1 EMPA 104 | 18,0 | 20,0 |
| Baumwolle Standard WFK 10D | 24,8 | 25,1 |
| Polyester Standard WFK 30D | 16,4 | 22,0 |
| Mittelwert | 19,2 | 21,4 |
| Baumwolle EMPA 112 | 32,7 | 37,8 |
| Baumwolle EMPA 116 | 36,9 | 37,1 |
| Baumwolle CFT A10 | 34,7 | 31,8 |
| Mittelwert | 34,8 | 35,6 |
| Baumwolle CFT BC1 | 15,3 | 16,9 |
| Baumwolle CFT BC4 | 18,2 | 18,3 |
| Baumwolle CFT CS3 | 42,7 | 43,6 |
| Mittelwert | 25,4 | 1,75 |

**TABELLE 5:**

| Inkrustationsverhalten (in % Asche nach 25 Waschgängen) | | |
|---|---|---|
| Gewebe | Formulierung A | Formulierung B |
| Frottee (Fa. Vossen) | 3,79 | 1,94 |
| Baumwolle EMPA | 2,57 | 1,34 |
| Baumwolle WFK | 2,97 | 2,45 |
| Polyester/Baumwolle 2 : 1 WFK | 3,00 | 1,31 |
| Doppelripp WFK | 3,25 | 1,73 |
| Mittelwert | 3,12 | 1,75 |

## Patentansprüche

1. Kristallines Natriumschichtsilikat der allgemeinen Formel
x Na₂O ^{·} y Si0₂ ^{·} z P₂0₅
in der
das Verhältnis x zu y einer Zahl von 0,35 bis 0,6,
das Verhältnis x zu z einer Zahl von 1,75 bis 1200
und das Verhältnis y zu z einer Zahl von 4 bis 2800 entspricht.

2. Kristallines Natriumschichtsilikat nach Anspruch 1, dadurch gekennzeichnet, daß das Verhältnis x zu y einer Zahl zwischen 0,4 bis 0,57, das Verhältnis x zu z einer Zahl von 8 bis 400 und das Verhältnis y zu z einer Zahl von 20 bis 800 entspricht.

3. Kristallines Natriumschichtsilikat nach Anspruch 1, dadurch gekennzeichnet, daß das Verhältnis x zu y einer Zahl von 0,45 bis 0,55, das Verhältnis x zu z einer Zahl von 15 bis 200 und das Verhältnis y zu z einer Zahl von 40 bis 400 entspricht.

4. Kristallines Natriumschichtsilikat nach mindestens einem der Ansprüche 1 bis 3, dadurch gekennzeichnet, daß es ein Kalkbindevermögen von mindestens 85 mg Ca²⁺/g Schichtsilikat aufweist.

5. Kristallines Natriumschichtsilikat nach Anspruch 4, dadurch gekennzeichnet, daß es ein Kalkbindevermögen von mindestens 90 mg Ca²⁺/g Schichtsilikat aufweist.

6. Verfahren zur Herstellung eines kristallinen Natriumschichtsilikats der allgemeinen Formel x Na₂O ^{·} y SiO₂ ^{·} z P₂O_{5,} in der x, y und z die in Anspruch 1 angegebene Bedeutung haben, dadurch gekennzeichnet, daß man eine phosphorhaltige Verbindung in einem wäßrigen Medium mit einer Silikatverbindung mischt, zur Reaktion bringt, teilentwässert und anschließend calciniert.

7. Verfahren nach Anspruch 6, dadurch gekennzeichnet, daß die phosphorhaltige Verbindung der allgemeinen Formel Hₙ₊₂PₙO₃ₙ₊₁ (n = 1 bis 6), HₙPₙO₃ₙ(n = 3 bis 8) und HPO₃ sowie deren Alkalisalzen entspricht und/oder Diphosphorpentoxid ist.

8. Verfahren nach Anspruch 6, dadurch gekennzeichnet, daß die Silikatverbindung Kieselsäure, Kieselgel, Natronwasserglas oder Quarzsand ist.

9. Verfahren nach mindestens einem der Ansprüche 6 bis 8, dadurch gekennzeichnet, daß bei 80 bis 300 °C teilentwässert wird.

10. Verfahren nach Anspruch 9, dadurch gekennzeichnet, daß bei 105 bis 220 °C teilentwässert wird.

11. Verfahren nach mindestens einem der Ansprüche 6 bis 10, dadurch gekennzeichnet, daß der Glühverlust der amorphen Produkte bei 720 °C und 1 h Glühdauer zwischen 1 und 22 Gew.-% beträgt.

12. Verfahren nach mindestens einem der Ansprüche 6 bis 11, dadurch gekennzeichnet, daß bei 560 bis 840 °C g calciniert wird.

13. Verfahren nach Anspruch 12, dadurch gekennzeichnet, daß bei 600 bis 780 °C calciniert wird.

14. Verfahren nach mindestens einem der Ansprüche 8 bis 13, dadurch gekennzeichnet, daß 0,5 bis 5 h calciniert wird.

15. Verfahren nach mindestens einem der Ansprüche 8 bis 14, dadurch gekennzeichnet, daß mittels Sprühtrocknen teilentwässert wird.

16. Verfahren nach mindestens einem der Ansprüche 8 bis 14, dadurch gekennzeichnet, daß mittels eines Trockenofens teilentwässert wird.

17. Verwendung der kristallinen Natriumschichtsilikate gemäß den Ansprüchen 1 bis 5 oder hergestellt nach den Verfahren der Ansprüche 6 bis 16 zur Enthärtung von Wasser, das Calcium- und/oder Magnesiumionen enthält.

18. Verwendung der kristallinen Natriumschichtsilikate gemäß den Ansprüchen 1 bis 5 oder hergestellt nach den Verfahren der Ansprüche 6 bis 16 als Builder.

19. Verwendung der kristallinen Natriumschichtsilikate gemäß den Ansprüchen 1 bis 5 oder hergestellt nach den Verfahren der Ansprüche 6 bis 16 in Wasch- und Reinigungsmitteln.

## Claims

1. A crystalline sheet sodium silicate of the formula
xNa₂O A ySiO₂ A zP₂O₅
in which
the ratio of x to y corresponds to a number from
0.35 to 0.6,
the ratio of x to z corresponds to a number from 1.75 to 1200
and the ratio of y to z corresponds to a number from 4 to 2800.

2. The crystalline sheet sodium silicate as claimed in claim 1, wherein the ratio of x to y corresponds to a number between 0.4 and 0.57, the ratio of x to z corresponds to a number from 8 to 400 and the ratio of y to z corresponds to a number from 20 to 800.

3. The crystalline sheet sodium silicate as claimed in claim 1, wherein the ratio of x to y corresponds to a number from 0.45 to 0.55, the ratio of x to z corresponds to a number from 15 to 200 and the ratio of y to z corresponds to a number from 40 to 400.

4. The crystalline sheet sodium silicate as claimed in at least one of claims 1 to 3, which has a calcium binding power of at least 85 mg of Ca²⁺/g of sheet silicate.

5. The crystalline sheet sodium silicate as claimed in claim 4, which has a calcium binding power of at least 90 mg of Ca²⁺/g of sheet silicate.

6. A process for the preparation of a crystalline sheet sodium silicate of the formula xNa₂O AySiO₂ A zP₂O₅, in which x, y and z have the meaning stated in claim 1, which comprises mixing a phosphorus-containing compound in an aqueous medium with a silicate compound, reacting them, and carrying out partial dehydration and then calcination.

7. The process as claimed in claim 6, wherein the phosphorus-containing compound corresponds to the formula Hₙ₊₂PₙO₃ₙ₊₁ (n = 1 to 6), HₙPₙO₃ₙ (n = 3 to 8) and HPO₃ and their alkali metal salts or is diphosphorus pentoxide.

8. The process as claimed in claim 6, wherein the silicate compound is silica, silica gel, soda waterglass or quartz sand.

9. The process as claimed in at least one of claims 6 to 8, wherein partial dehydration is carried out at 80 to 300°C.

10. The process as claimed in claim 9, wherein partial dehydration is carried out at 105 to 220°C.

11. The process as claimed in at least one of claims 6 to 10, wherein the loss on ignition of the amorphous products at 720°C and for an ignition time of 1 h is between 1 and 22% by weight.

12. The process as claimed in at least one of claims 6 to 11, wherein calcination is carried out at 560 to 840°C.

13. The process as claimed in claim 12, wherein calcination is carried out at 600 to 780°C.

14. The process as claimed in at least one of claims 8 to 13, wherein calcination is carried out for 0.5 to 5 h.

15. The process as claimed in at least one of claims 8 to 14, wherein partial dehydration is carried out by means of spray-drying.

16. The process as claimed in at least one of claims 8 to 14, wherein partial dehydration is carried out by means of a drying oven.

17. The use of the crystalline sheet sodium silicates as claimed in any of claims 1 to 5 or prepared by the processes of claims 6 to 16 for softening water which contains calcium ions or magnesium ions or calcium ions and magnesium ions.

18. The use of the crystalline sheet sodium silicates as claimed in any of claims 1 to 5 or prepared by the processes of claims 6 to 16 as builders.

19. The use of the crystalline sheet sodium silicates as claimed in any of claims 1 to 5 or prepared by the processes of claims 6 to 16 in detergents and cleaning agents.

## Revendications

1. Silicate de sodium cristallin lamellaire de formule générale
xNa₂O·ySiO₂·zP₂O₅,
dans laquelle
le rapport x sur y correspond à un nombre de 0,35 à 0,6,
le rapport x sur z correspond à un nombre de 1,75 à 1200
et le rapport y sur z à un nombre de 4 à 2800.

2. Silicate de sodium cristallin lamellaire selon la revendication 1, caractérisé en ce que, le rapport de x sur y correspond à un nombre compris entre 0,40 et 0,57, le rapport de x sur z à un nombre de 8 à 400 et le rapport de y sur z à un nombre allant de 20 à 800.

3. Silicate de sodium cristallin lamellaire selon la revendication 1, caractérisé en ce que, le rapport de x sur y correspond à un nombre allant de 0,45 à 0,55, le rapport de x sur z à un nombre de 15 à 200 et le rapport de y sur z à un nombre de 40 à 400.

4. Silicate de sodium cristallin lamellaire selon au moins une des revendications 1 à 3, caractérisé en ce qu'il présente une capacité de liaison du calcaire d'au moins 85 mg Ca²⁺/g de silicate lamellaire.

5. Silicate de sodium cristallin lamellaire selon la revendication 4, caractérisé en ce qu'il présente une capacité de liaison du calcaire d'au moins 90 mg Ca²⁺/g de silicate lamellaire.

6. Procédé de préparation d'un silicate de sodium cristallin lamellaire de formule générale xNa₂O·ySiO₂·zP₂O₅, dans laquelle x, y et z ont la signification indiquée à la revendication 1, caractérisé en ce que, l'on fait réagir une composé phosphoré dans un milieu aqueux avec un composé silicate, on le déshydrate partiellement et on le calcine ensuite.

7. Procédé selon la revendication 6, caractérisé en ce que le composé phosphoré correspond à la formule générale Hₙ₊₂PₙO₃ₙ₊₁ (n = 1 à 6), HₙPₙO₃ₙ (n = 3 à 8) et HPO₃, ainsi qu'à leurs sels de métaux alcalins et/ou est le pentoxyde de phosphore.

8. Procédé selon la revendication 6, caractérisé en ce que le composé silicate est l'acide silicique, le gel de silice, le silicate de soude ou le sable silicieux.

9. Procédé selon au moins une des revendications 6 à 8, caractérisé en ce qu'on déshydrate partiellement entre 80 et 300°C.

10. Procédé selon la revendication 9, caractérisé en ce qu'on déshydrate partiellement entre 105 et 220°C.

11. Procédé selon au moins une des revendications 6 à 10, caractérisé en ce que la perte au feu des produits amorphes à 700°C et à une durée de calcination de 1 h est située entre 1 et 22% en poids.

12. Procédé selon au moins une des revendications 6 à 11, caractérisé en ce qu'on calcine entre 560 et 840°C.

13. Procédé selon la revendication 12, caractérisé en ce qu'on calcine entre 600 et 780°C.

14. Procédé selon au moins une des revendications 8 à 13, caractérisé en ce qu'on calcine entre 0,5 et 1 h.

15. Procédé selon au moins une des revendications 8 à 14, caractérisé en ce qu'on déshydrate partiellement au moyen d'une lyophilisation.

16. Procédé selon au moins une des revendications 8 à 14, caractérisé en ce qu'on déshydrate partiellement au moyen d'un four de séchage.

17. Utilisation des silicates de sodium cristallins lamellaires selon les revendications 1 à 5 ou préparés selon les procédés des revendications 6 à 16 pour adoucir de l'eau, qui contient des ions calcium et/ou magnésium.

18. Utilisation des silicates de sodium cristallins lamellaires selon les revendications 1 à 5 ou préparés selon les procédés des revendications 6 à 16 comme builder.

19. Utilisation des silicates de sodium cristallins lamellaires selon les revendications 1 à 5 ou préparés selon les procédés des revendications 6 à 16 dans des détergents et des agents de nettoyage.
